# EUROPÄISCHE PATENTSCHRIFT

(11) **EP 4 153 880 B1**
(45) Veröffentlichungstag und Bekanntmachung des Hinweises auf die Patenterteilung: **03.07.2024**
(21) Anmeldenummer: 21731387.3
(22) Anmeldetag: 15.05.2021
(51) Int. Cl.: F16D 55/12

(54) **BREMS- UND/ODER KLEMMVORRICHTUNG MIT EINER BETÄTIGUNGS- UND EINER WELLENANBINDUNGSBAUGRUPPE**
BRAKE AND/OR CLAMPING DEVICE WITH AN ACTIVATION GROUP AND A SHAFT ATTACHMENT GROUP
FREIN ET/OU DISPOSITIF DE BLOCAGE AVEC UN GROUPE DE DÉCLENCHEMENT ET UN GROUPE DE JONCTION À UN ARBRE.

(30) Priorität: 23.05.2020 DE 102020003061
(43) Veröffentlichungstag der Anmeldung: 29.03.2023
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2021/000092
(87) Internationale Veröffentlichungsnummer: WO 2021/239170

(56) Entgegenhaltungen:
- DE-A1- 2 106 009
- DE-B3-102016 005 549
- DE-B3-102016 009 581
- US-A- 3 651 909

## Beschreibung

Die Erfindung betrifft eine Brems- und/oder Klemmvorrichtung für eine gegenüber einem Grundkörper geführte Welle mit einer Betätigungsbaugruppe und mit einer Wellenanbindungsbaugruppe.

Die DE 10 2016 009 581 B3 beschreibt eine Brems- und/oder Klemmvorrichtung mit einer Betätigungs- und einer Wellenanbindungsbaugruppe. Die Vorrichtung weist zwei zu einem Spaltgehäuse einteilig verbundene, beulbare Biegeplatten auf, zwischen denen ein spaltartiger Druckraum angeordnet ist. Der Druckraum ist zur Welle hin mit einem Dichtring abgedichtet, der sich an einem an einer der Biegeplatten befestigten Schraubring abstützt. Die Biegeplatten umgreifen eine Bremsscheibe von außen. Sie liegen dabei axial an der Bremsscheibe an, sofern der Druckraum druckentlastet ist.

Aus der DE 10 2017 004 403 A1 ist eine mit der zuvor genannten Druckschrift vergleichbare Brems- und/oder Klemmvorrichtung mit einer Betätigungs- und einer Wellenanbindungsbaugruppe bekannt, deren den Druckraum abdichtenden Dichtring ebenfalls mit einem Schraubring gehalten wird. Der Schraubring ist als fixierbarer Verstellring ausgebildet.

Die DE 10 2016 005 549 B3 beschreibt eine Brems- und/oder Klemmvorrichtung mit einer Betätigungs- und einer Wellenanbindungsbaugruppe. Die Vorrichtung weist zwei gegeneinander verschraubte, beulbare Ringscheiben auf, zwischen denen ein spaltartiger Druckraum angeordnet ist. Die Ringscheiben umgreifen eine Bremsscheibe von außen. Sie liegen dabei axial an der Bremsscheibe an, sofern der Druckraum druckentlastet ist.

Der vorliegenden Erfindung liegt die Problemstellung zugrunde, eine derartige Brems- und/oder Klemmvorrichtung zu entwickeln, die auch bei einem großen Durchmesser eine geringe Baubreite aufweist, aus wenigen Bauteilen besteht und zudem einfach, sicher und wartungsfrei funktioniert.

Diese Problemstellung wird mit den Merkmalen des Hauptanspruchs gelöst. Dabei weist die Betätigungsbaugruppe ein Spaltgehäuse auf, das eine Anbauzone und eine bereichsweise elastisch beulbare Biegezone mit zwei über einen nach außen orientierten Spaltraum beabstandete Biegeplatten hat. Die Biegeplatten haben in zwei einander gegenüberliegenden Klemmzonen jeweils Zangenbacken mit Reibflächen, deren Flächennormalen nach innen gerichtet sind. Jede Biegeplatte weist - zur Lagerung mindestens eines Stützelements - vom Spaltraum aus eine Axialnut auf. Zwischen den Biegeplatten und dem mindestens einen Stützelement liegt ein abgedichteter Spaltraum, der zum elastischen Auseinanderdrücken der Reibflächen mit einem Druckmedium befüllbar ist. Die Wellenanbindungsbaugruppe weist als Bremsscheibe einen ein- oder mehrfach geteilten Ring oder mindestens zwei Kreisringsegmente auf. Die Wellenanbindungsbaugruppe hat einen Kupplungsbereich, der zwei voneinander beabstandete Reibflächen hat, deren Flächennormalen nach außen weisen. Bei entlastetem Spaltraum sind die Reibflächen der Betätigungsbaugruppe an den Reibflächen der Wellenanbindungsbaugruppe unter Bereitstellung der Klemm- und/oder Bremskraft angelegt. Das Stützelement ist ein elastisch verformbarer metallischer Stützstreifen, dessen Länge der mittleren Länge der einzelnen Axialnut entspricht. Die einzelne Axialnut weist mindestens eine Einfädelnut auf, die in sie einmündet

Der Gegenstand der vorliegenden Erfindung ist eine mindestens zweiteilige Brems- und/oder Klemmvorrichtung für Wellen. Das eine Teil wird - als ein eine Bremsscheibe oder Bremsscheibensegmente tragender Adapter - auf die rotierende Welle montiert und an dieser festgeklemmt oder festgeschraubt. Das andere Teil ist eine Art von Zange, die an einem ortsfesten, z.B. die vorgenannte Welle lagernden Maschinenteil befestigt ist. Die Zange hat zwei an je einer Biegeplatte angeordnete, z.B. ringförmige Zangenbacken, mit denen sie die Bremsscheibe oder Bremsscheibensegmente lose umfassen oder drehfest umgreifen kann. Die die Welle bremsenden oder klemmenden Vorrichtungsteile liegen nicht auf der in Radialrichtung orientierten Außenwandung der Welle an.

Die die Zangenbacken tragenden Biegeplatten der Vorrichtung lassen sich vereinfacht als zwei Tellerfedern beschreiben, deren beiden Außenränder einander zugewandt sind, während die im Durchmesser kleineren Innenränder in Axialrichtung weit auseinanderliegen. Zwischen den Außenrändern, die eine Klemmzone bilden, ist entweder eine ein- oder mehrteilige Bremsscheibe oder eine Gruppe aus mindestens zwei Bremsscheibensegmenten angeordnet. Werden nun die Innenränder, die die Anbauzone darstellen, in Axialrichtung aufeinander zubewegt, klemmen die im Durchmesser größeren Außenränder die Bremsscheibe zum Halten federgespannt zangenartig ein. Die Tellerfedern werden bei der Herstellung im Bereich der Innenränder aneinander angeformt, sodass sich der Abstand der Innenränder nicht mehr ändern lässt. Um nun die eingeklemmte Bremsscheibe wieder freizugeben, werden die Tellerfedern mit Öldruck auseinandergepresst. Die Außenränder lösen sich von der Bremsscheibe. Die bisher zum Klemmen wenig vorgespannten Tellerfedern werden somit zum Lösen noch stärker gespannt bzw. verformt.

Alternativ lässt sich die Vorrichtung auch so gestalten, dass das Spaltgehäuse an der rotierenden Welle angeordnet ist, während die Bremsscheibe ortsfest gelagert in einen offenen Spaltraum der Zange hineinragt. Der Außendurchmesser der Bremsscheibe ist dabei größer als der maximale Außendurchmesser der Zange.

Die Brems- und/oder Klemmvorrichtung weist als Ausführungsbeispiele zwei verschiedene, einfach aufgebaute Wellenanbindungsbaugruppen auf. Jede Wellenanbindungsbaugruppe basiert auf einem an der rotierenden Welle vorhandenen Flansch und auf einer zwei- oder mehrteiligen Bremsscheibe. Eine mehrteilige Bremsscheibe besteht aus drei oder mehreren ggf. unterschiedlich großen Teilstücken, die nahezu fugenlos - zu einem zumindest weitgehend geschlossenen Ring - aneinandergesetzt werden. Eine Bremsscheibenvariante setzt sich aus drei oder mehr jeweils gleichförmigen Teilstücken zusammen, die untereinander jeweils durch schmale Spalte getrennt sind. Die Spalte können dabei radial oder tangential verlaufen. Ggf. kann das einzelne Spaltmaß unter 5 um liegen. Die durch die Spalte gebildete Montagefuge kann hierbei geradlinig, sichel- oder kreisbogenförmig ausgeführt sein. Die Montagefuge kann zudem jede beliebige andere Form annehmen, wobei sie auch einen oder mehrere Knicke aufweisen darf. Es ist auch möglich, anstelle der zuvor beschriebenen quasigeschlossenen Bremsscheibe zwei oder mehr Bremsscheibensegmente zu benutzen, die - gleichmäßig auf dem Umfang verteilt - weniger als z.B. 180 Winkelgrade zum Bremsen und/oder Klemmen abdecken.

Weitere Einzelheiten der Erfindung ergeben sich aus den Unteransprüchen und der nachfolgenden Beschreibung mehrerer schematisch dargestellter Ausführungsformen.
- Figur 1:: perspektivische Ansicht einer Brems- und/oder Klemmvorrichtung;
- Figur 2:: Querschnitt zu Figur 1, wobei das Spaltgehäuse im oberen Schnittbereich betätigt und fiktiv im unteren unbetätigt dargestellt ist;
- Figur 3:: Variante zur Wellenanbindungsbaugruppe aus Figur 2;
- Figur 4:: Teilquerschnitt der Doppellippendichtung und des Stützelements, vergrößert;
- Figur 5:: Teillängsschnitt des Stützelements, vergrößert;
- Figur 6:: halbe Ansicht des Spaltgehäuses mit Einfädelnut in einem Ausschnitt;
- Figur 7:: perspektivische Ansicht eines Bremsscheibenteils;
- Figur 8:: Detailvergrößerung zu Figur 7, jedoch mit verbreitertem Kupplungsbereich.

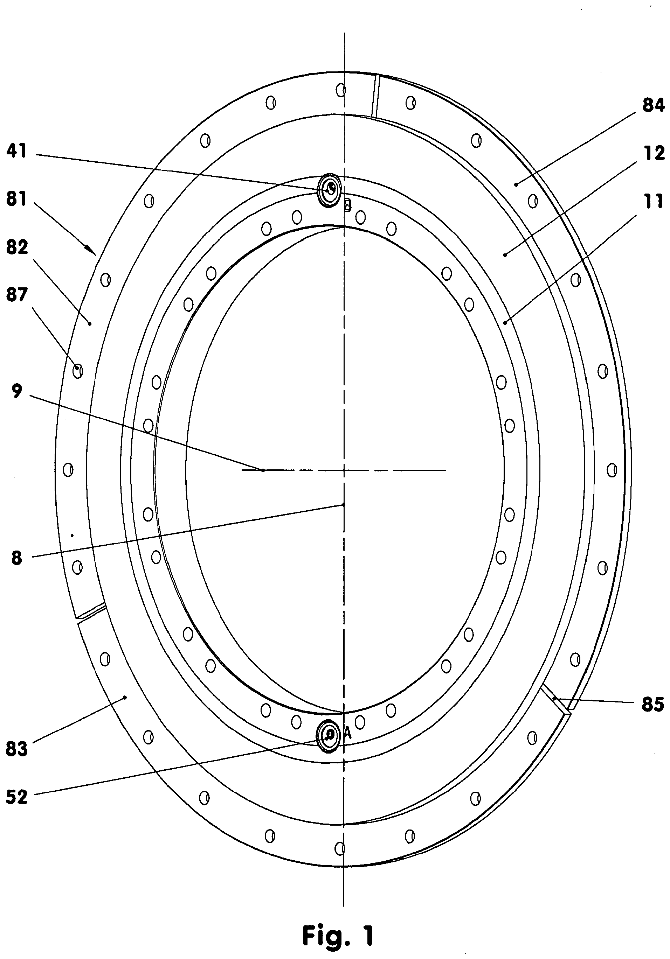

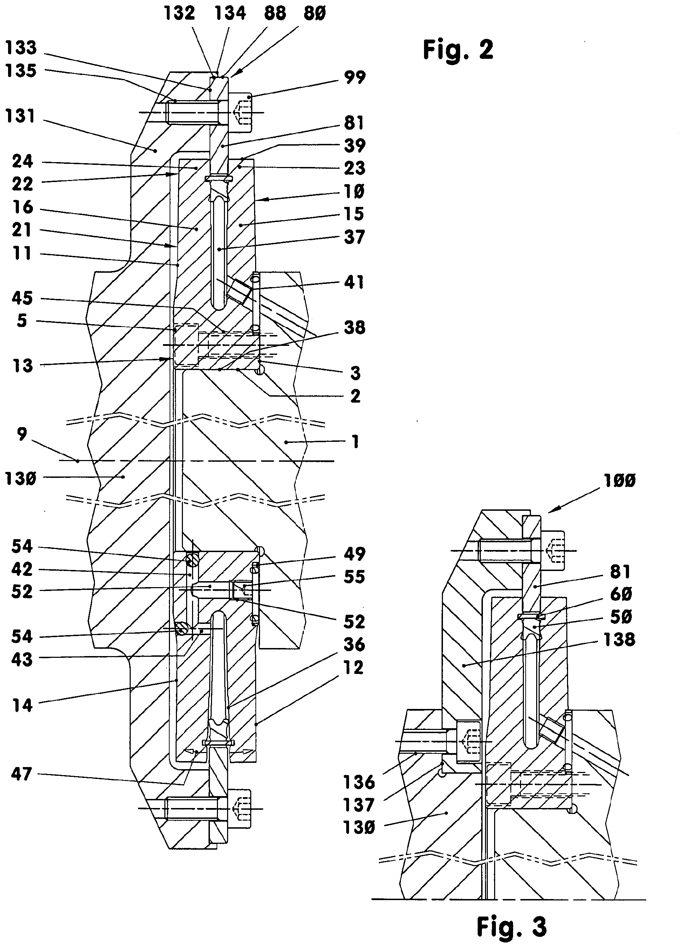

Die Figur 1 zeigt die Brems- und/oder Klemmvorrichtung ohne den tragenden maschinenseitigen Grundkörper (1), vgl. Figur 2, und ohne die abzubremsende und/oder festzuklemmende Welle (130). Am nichtrotierenden Grundkörper (1) ist eine Betätigungsbaugruppe (10) starr befestigt. Letztere hat eine z.B. plane Anbaufläche (3), über die sie mittels Schrauben (5) am Grundkörper (1) angeschraubt wird. Eine Wellenanbindungsbaugruppe (80, 100), die hier eine mehrfach geteilte Bremsscheibe (81) trägt, umgibt zumindest bereichsweise die Betätigungsbaugruppe (10). Die Bremsscheibe (81) ist mittels der Schrauben (99) an einer Wellenglocke (131) der zu bremsenden Welle (130) drehstarr und zentriert befestigt.

Die Betätigungsbaugruppe (10) hat ein elastisches Spaltgehäuse (11), das mit seinen Zangenbacken (23, 24) - beim Bremsen oder Klemmen - zangenartig an der Bremsscheibe (81) anliegt. Das Spaltgehäuse (11) umschließt zusammen mit einem Dichtring (50) und einem Stützelement (60) einen Spaltraum (37), der im Folgenden als Druckraum bezeichnet wird. Wird Letzterer mit einem gasförmigen, flüssigen oder gelartigen Druckmittel beaufschlagt, löst sich die zangenartige Umklammerung der Bremsscheibe (81).

Der Druckraum (37), vgl. Figur 2, hat ein Volumen, das kleiner ist als 15 Prozent des Hüllvolumens der Betätigungsbaugruppe (10). Das Hüllvolumen der in Figur 2 dargestellten Variante der Betätigungsbaugruppe (10), entspricht einem gegebenen Volumen eines Rohrkörpers, der als Rohrlänge die Vorrichtungsbreite, als Außendurchmesser den äußeren Vorrichtungsdurchmesser und als Innendurchmesser den minimalen Innendurchmesser der Biegeplatten (15, 16) hat.

Die Betätigungsbaugruppe (10) weist ein ring- bzw. rohrförmiges Spaltgehäuse (11) auf, das den z.B. schmalspaltigen ringförmigen Druckraum (37) umschließt. Das Spaltgehäuse (11) ist im klemmenden Zustand, vgl. Figur 2, oberer Darstellungsbereich, im Wesentlichen ein flacher Ringkörper mit zumindest bereichsweise ebenen Stirnseiten, der radial außen durch eine z.B. zylindrische Außenwandung (39) und radial innen durch eine zentrale Bohrung (38) begrenzt ist. Das Spaltgehäuse (11) hat einen Innendurchmesser von z.B. ca. 238 mm und einen Außendurchmesser von z.B. 346 mm. Die maximale Dicke des Ringkörpers liegt z.B. bei 22 mm. Sie entspricht der oben genannten Vorrichtungsbreite. Das Spaltgehäuse (11) ist aus einem Vergütungsstahl, z.B. 42CrMoS4, gefertigt. Es ist in drei Bereiche (13, 21, 22) aufgeteilt, die in Radialrichtung aneinander anschließen. Der äußere Bereich sind die Klemmzonen (22). An sie schließt sich jeweils eine in Radialrichtung weiter innenliegende Biegezone (21) an. Beide Biegezonen (21) münden in einen inneren Bereich, also die Anbauzone (13).

Das Spaltgehäuse (11) wird zur Herstellung des Spaltraumes (37) von seiner z.B. zylindrischen Außenwandung (39) aus ca. mittig zwischen den Stirnseiten ausgedreht oder ausgefräst. Für das Ausfräsen wird z.B. ein Scheibenfräser verwendet. Die ausgefräste, z.B. 38,7 mm tiefe Spaltraumnut hat eine Spaltbreite von z.B. 4 mm. Der rinnenförmige Nutgrund hat zum Minimieren von Kerbspannungen hier einen Radius von 2 mm. Zwischen der Nutmitte und der Außenwandung (39) ist die Spaltraumnut auf einer Tiefe von 16,5 mm als Feinbearbeitungszone (36) auf 4,3 mm verbreitert.

Die innenliegende Anbauzone (13), in die die Spaltraumnut als Druckraum (37) nicht oder nur 1 bis 10 mm hineinragt, hat z.B. beidseitig eine zumindest bereichsweise plane Stirnfläche, über die das Spaltgehäuse (11) an einer Anbaufläche (3) des Grundkörpers (1) anlegbar ist, vgl. Figur 2. Das Spaltgehäuse (11) liegt mit seiner Bohrung (38) in Radialrichtung am Zentrierbund (2) des Grundkörpers (1) an.

Die Anbauzone (13) weist für die Befestigung am Grundkörper (1) auf einem Durchmesser von z.B. 250 mm eine Bohrungsgruppe mit beispielsweise 24 Bohrungen (45) auf. Die Bohrungen (45) sind paarweise zusammengefasst, wobei je zwei Bohrungen - bezogen auf die Mittellinie (9) - einen Winkel von 10 Winkelgrade einschlie-ßen. Diese Bohrungen (45) sind z.B. Senk- oder Doppelsenkbohrungen.

Zwischen mindestens zwei benachbarten Bohrungspaaren der Bohrungen (45) befindet sich eine Zulaufgewindebohrung (41) und eine Verschlussstopfengewindebohrung (52). Die Bohrungen (41, 52) liegen sich innerhalb der Betätigungsbaugruppe (10) z.B. auf verschiedenen Durchmessern diametral gegenüber. Sie sind entweder auf einer Stirnseite (12) oder (14) der Anbauzone (13) oder auf unterschiedlichen Stirnseiten (12, 14) angeordnet. Die Zulaufgewindebohrung (41), die ein Innengewinde für einen Gewindestopfen aufweist, ist gegenüber der Mittellinie (9) des Spaltgehäuses (11) um 30 Winkelgrade geneigt. Sie mündet in den Druckraum (37) im Bereich des rinnenförmigen Nutgrundes.

Die Zulaufgewindebohrung (41) und/oder die Verschlussstopfengewindebohrung (52) ist oder sind jeweils von einem Schneidring (49) umgeben. In jedem Schneidring (49) liegt auch ein Elastomerkörper als Dichtring. Der Schneidring (49) unterstützt hier, zusammen mit dem Dichtring, die Dichtwirkung zwischen der Anbaufläche (3) des Grundkörpers (1) und der anliegenden Seite der Betätigungsbaugruppe (10).

Nach Figur 2 befindet sich in der Anbauzone (13) mindestens eine Verschlussstopfengewindebohrung (52), die z.B. als Entlüftungsbohrung beim Befüllen des Druckraums (37) dient. Sie mündet in eine radiale Verteilbohrung (42). Zur Vorderseite (12) hin ist sie mit einem Verschlussstopfen (55) verschlossen. Von der Verteilbohrung (42) aus ist sie über eine axiale Verteilbohrung (43) mit dem Druckraum (37) verbunden. Nach außen hin sind die Verteilbohrungen (42, 43) mit Hilfe von eingestemmten Stauchkugeln (54) öl- und/oder gasdicht dauerhaft verschlossen.

Die Verteilbohrungen (42, 43) haben hier einen Durchmesser von z.B. 3 mm. Das über die Zulaufgewindebohrung (41) in den Druckraum (37) einströmende Hydrauliköl, z.B. ein Öl vom Typ HLP 46 nach DIN 51524, Teil 2, das bei 40° Celsius eine Viskosität von 46 ± 2 mm²/s aufweist, verteilt sich schnell im Druckraum (37).

Die beiden an die Anbauzone (13) angeformten Biegeplatten (15, 16) stellen die elastische Biegezone (21) dar. Die beidseits des Druckraumes (37) gelegenen, elastisch verformbaren Biegeplatten (15, 16) verjüngen sich - bezüglich ihrer Wandstärke - von innen aus in Richtung der Außenwandung (39). Ihre Wandstärke verringert sich im Ausführungsbeispiel, nach Figur 2, links von z.B. 8,6 auf 7,75 mm und rechts von z.B. 7,4 auf 6,55 mm. Die Formsteifigkeit der Biegeplatten (15, 16) nimmt somit in Richtung der Klemmzone (22) nahezu stetig ab. Die Übergänge zwischen den Zonen (13) und (21) sind beispielsweise mit großen Radien ausgerundet. Die Biegezone (21) ist gegenüber der Anbauzone (13) zurückgenommen gestaltet, um die Verformung der Biegezone (21) nicht in die zwischen dem Grundkörper (1) und der Anbauzone (13) gelegene Einbaufuge einzutragen. Selbstverständlich können die Biegeblatten (15, 16) auch vergleichbare Geometrieabmessungen haben.

Die Biegeplatten (15, 16) der Biegezone (21) gehen zur Wellenanbindungsbaugruppe (80, 100) hin in die beiden Klemmzonen (22) über, die die umlaufenden Zangenbacken (23, 24) darstellen. Die Zangenbacken (23, 24) sind zugleich ein Teil der jeweiligen Biegeplatte (15, 16).

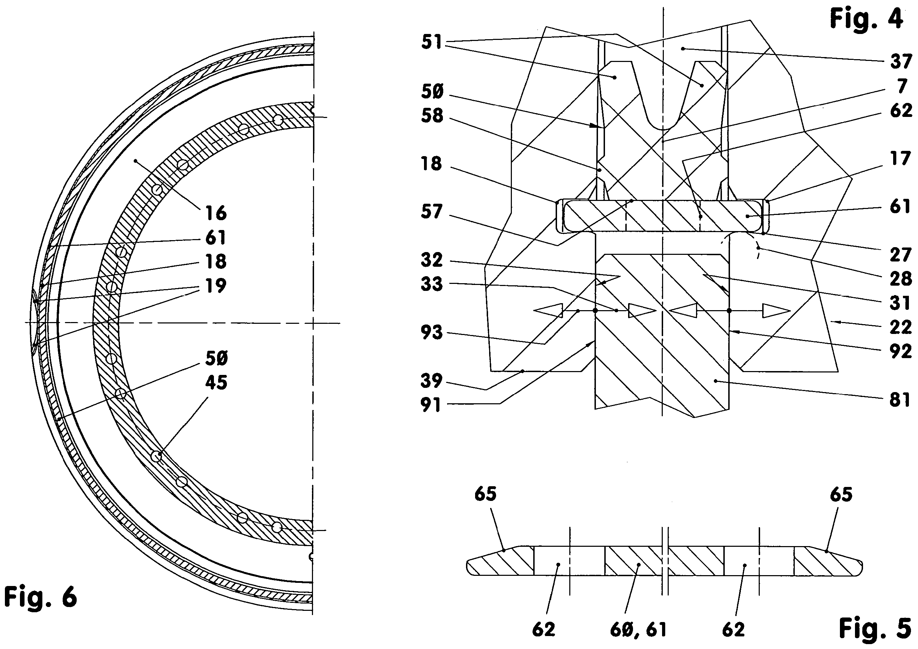

Jede Biegeplatte (15, 16) weist zwischen der Biegezone (21) und der Klemmzone (22) eine umlaufende Axialnut (17, 18) auf, vgl. Figur 4. Die Axialnut (17, 18), die beispielsweise einen rechteckigen Querschnitt hat, hat bei einer Breite von z.B. 1,1 mm eine Tiefe von z.B. 1,35 mm. Die beiden Kanten des Axialnutgrunds sind abgerundet. Die der Außenwandung (39) nächstgelegene Nutwandung der Axialnut (17, 18) ist im Ausführungsbeispiel 4,4 mm von der Außenwandung (39) entfernt. Die einzelne Axialnut (17, 18) wird z.B. mit einem Scheibenfräser aus der jeweiligen Biegeplatte (15, 16) herausgearbeitet. Dazu hat der Scheibenfräser einen Außendurchmesser, der geringfügig kleiner ist als die Breite der Spaltraumnut. Zudem hat der Scheibenfräser vorzugsweise Zähne, die jeweils rechts und links 1,4 mm über den Fräserschaft überstehen. Die Fräserscheibe selbst hat eine Scheibenstärke von 1,0 mm. Zum Erzeugen der Axialnuten (17, 18) wird der Scheibenfräser zwischen den Biegeplatten (15, 16) in den Druckraum (37) eingefahren. Bei langsam rotierendem Spaltgehäuse (11) wird der ebenfalls rotierende Scheibenfräser zum Fräsen der Axialnut (17) in Richtung der Biegeplatte (15) zugestellt, um nach deren Fertigstellung in umgekehrter Richtung in die Biegeplatte (16) einzutauchen und dort wiederum die Axialnut (18) herauszufräsen.

Gemäß Figur 6 weist die Axialnut (17, 18) zwei nebeneinander liegende Einfädelnuten (19) auf. Sie haben einen Krümmungsradius von z.B. 30 bis 70 mm. Im Ausführungsbeispiel beträgt der Krümmungsradius 45 mm. Die einzelne Einfädelnut (19) geht tangential in die entsprechende Axialnut (17, 18) über. Der Querschnitt der Einfädelnut (19) entspricht dem der einzelnen Axialnut (17, 18). Ggf. ist die Querschnittshöhe aufgrund des kleinen Krümmungsradius der Einfädelnuten (19) geringfügig größer als 1 mm.

In der Axialnut (17, 18) ist als Stützelement (60) ein elastisch verformbarer metallischer Stützstreifen (61) eingelegt, der z.B. aus dem kaltgewalzten Federbandstahl Ck 101 oder aus dem naturharten Federstahl 38 Si 6 gefertigt ist. Der Stützstreifen (61), vgl. Figur 5, hat eine Länge, die der mittleren Länge der einzelnen Axialnut (17, 18), abzüglich eines Spiels von 1 mm, entspricht. Bei einer Wandstärke von z.B. 1 mm hat er eine Breite von z.B. 6,9 mm. Nach den Figuren 2 und 4 hat der Stützstreifen (61) einen rechteckigen Querschnitt. Alle vier Kanten sind angefast oder abgerundet. Er hat in radialer und axialer Richtung - bei einem unverformten Spaltgehäuse (11) - in der Axialnut (17, 18) jeweils 0,1 mm Spiel.

Gemäß Figur 4, sie zeigt die Klemmzone (22) im klemmenden Zustand, ist die der Außenwandung (39) des Spaltgehäuses (11) nächstgelegene Nutwandung (27) eine mehrfachgekrümmte Raumfläche. Um bei einer Durchbiegung des Stützstreifens (61) - quer zu seiner Längsausdehnung - eine kantenträgerfreie Auflage in der Axialnut (17, 18) zu ermöglichen, hat die Nutwandung (27) anstelle einer Zylinderfläche in der Kontaktzone z.B. eine Teilfläche (28) eines Torus, dessen Krümmung in Figur 4 gestrichelt dargestellt ist. Der kleine Querschnitt des Torus hat einen Durchmesser von z.B. 1,4 mm. Zum Nutgrund der Axialnut (17, 18) hin entfernt sich die Nutwandung (27) tangential im Anschluss an die Torusteilfläche (28) mit einer kegelstumpfmantelförmigen Fläche von der Unterseite des Stützstreifens (61).

Die Mitten der Kontaktstellen zwischen dem Stützstreifen (61) und den Nutwandungen (27) liegen bei festgeklemmter Bremsscheibe (81) z.B. 5,4 mm auseinander.

Der Stützstreifen (61), vgl. Figur 5, weist im Bereich seiner Enden jeweils eine Zugbohrung (62) auf, deren Durchmesser z.B. 2,5 mm misst. Die Mittellinie der einzelnen Zugbohrung (62) ist von den Enden jeweils z.B. 4 mm entfernt. Über mindestens eine Zugbohrung (62) wird der Stützstreifen (61) - in der Regel im eingebetteten Zustand und nach vorherigem Einlegen des Dichtrings - über die Einfädelnut (19) in die Axialnut (17, 18), z.B. Mithilfe eines Hakens, eingefädelt. Zur Demontage kann der Stützstreifen (61) ebenfalls mithilfe eines Hakens über eine der Einfädelnuten (19) aus dem Spaltgehäuse (11) entfernt werden.

Zur Erleichterung des Einfädelvorgangs hat der Stützstreifen (61) vorn und hinten eine 15°-Fase (65), die sich über 2 mm der Stützstreifenlänge erstreckt. Alle vorderen Kanten sind angefast oder abgerundet.

Jede Zangenbacke (23, 24) hat zwischen der jeweiligen Axialnut (17, 18) und der Außenwandung (39) eine z.B. plane Reibfläche (31, 32), vgl. Figur 4. Diese Reibflächen (31, 32) sind parallel zur Mittenebene (7) orientiert. Ihre Flächennormalen (33) sind nach innen gerichtet, sodass sie die Mittenebene (7) schneiden.

In der Klemmzone (22) beträgt die maximale Breite der Reibfläche (31, 32) z.B. 4,4 mm. Die nutzbare Breite der Reibfläche (31, 32) ist z.B. um 1 mm kleiner.

Nach Figur 2 haben die Reibflächen (31, 32) im Ausführungsbeispiel einen von der Mittellinie (9) aus gemessenen mittleren Radius von z.B. 170,5 mm. Die Reibflächen (31, 32) sind zur Bremsscheibe (81) hin gewölbt ausgeführt, sodass sie theoretisch die Bremsscheibe (81) in der Schnittebene der Figur 2 in einem Punkt bzw. in der Bremsscheibendraufsicht nur in einer kreisförmigen Linie kontaktieren. Die Wölbung hat einen Krümmungsradius von z.B. 12,5 mm. Sie ist Teil der Außenwandung eines Torus, dessen Ringmittellinie - bei einem Ringdurchmesser von 25 mm - auf einem Radius von z.B. 170,5 mm liegt. Der Ringdurchmesser des Torus beträgt hier 25 mm. Nur auf der Höhe der Ringmittellinie liegen hier die Flächennormalen (33) auf einer geraden Wirk-linie.

Ggf. sind die Reibflächen (31, 32) auch als kegelstumpfmantelförmige Flächen ausgebildet, sodass beim Klemmen der Bremsscheibe (81) die Reibflächen (31, 32) vollflächig und plan an der jeweiligen Bremsscheibe anliegen.

Nach dem Zusammenbau der Brems- und/oder Klemmvorrichtung liegen die Zangenbacken der Betätigungsbaugruppe (10), bei geklemmter Brems- und/oder Klemmvorrichtung, an der jeweiligen Bremsscheibe (81) der Wellenanbindungsbaugruppe (80, 100) an, vgl. Figur 2, oberer Figurenbereich. Die Reibflächen (31, 32) beider Zangenbacken (23, 24) haben nach innen gerichtete Flächennormalen (33), vgl. auch Figur 4. Die Wirklinien der Flächennormalen (33) zeigen in Richtung der Mittenebene (7).

Radial zur Außenwandung (39) hin wird der Spalt- bzw. Druckraum (37) durch eine Doppellippendichtung (50) abgeschlossen. Die aus z.B. einem Polyurethan mit einer Shore D-Härte von 57 gefertigte Doppellippendichtung (50) hat zwei axial nach außen orientierte Dichtlippen (51), die sich jeweils an den seitlichen Wandungen des Druckraumes (37) aufgrund der eigenen Elastizität und zusätzlich durch den im Druckraum (37) anstehenden Innendruck nach dem Prinzip der Selbsthilfe anlegen. Die Unterseite (57) der Doppellippendichtung (50) - also die den Dichtlippen (51) abgewandte Dichtungsseite - liegt auf der glatten Innenwandung des Stützstreifens (61) auf. Nach Figur 4 weist die Doppellippendichtung (50) ca. 1 mm oberhalb der Unterseite (57) beidseits jeweils einen Stützsteg (58) auf, über den die Doppellippendichtung (50) - zur Verbesserung des Sitzes im Druckraum (37) - zusätzlich an den Innenwandungen des Druckraums (37) anliegt. Die Stützstege (58) haben eine zentrierende Wirkung.

In Figur 2 ist als Wellenanbindungsbaugruppe (80, 100) eine Bremsscheibe (81) dargestellt, die an einer sie tragenden Welle (130) befestigt ist. Dazu hat die Welle (130) eine angeformte Wellenglocke (131) mit einer planen Bundfläche (133) und einem Glockeninnenbund (132). Die Welle (130) reduziert dort ihren Durchmesser von z.B. 390 mm auf z.B. 288 mm.

Der Glockeninnenbund (132) umgreift zentrierend die Bremsscheibe (81) auf einer Länge von z.B. 2-3 mm. An der Bundfläche (133) liegt die Bremsscheibe - in Radialrichtung gesehen - auf einer Länge von z.B. 19 mm an. Auf der Bundfläche (133) sind 24 M6-Gewindebohrungen (135) äquidistant verteilt, die auf einem Durchmesser von z.B. 370 mm liegen.

In Figur 3 ist eine Wellenanbindungsbaugruppe (100) dargestellt, bei der im Stirnbereich der Welle (130) ein Glockenflansch (138) angeschraubt ist. Der Glockenflansch (138), der großteils baugleich zur Wellenglocke (131) ist, liegt zentriert und verschraubt am Wellenbund (137) der Welle (130) an. Der Glockenflansch (138) kann auch in angepasster Form beispielsweise über ein Doppelkonus-Spannelement, Schrumpfscheiben, Sternscheiben, Spann- oder Druckhülsen, Ring-Spannelemente und dergleichen mit der Welle (130) drehstarr verbunden sein.

Figur 1 zeigt eine z.B. dreiteilige Bremsscheibe (81), deren Teile (81-83) so angeordnet sind, wie sie zueinander im Einbauzustand positioniert sind. Die Bremsscheibe ist zumindest als Hüllvolumen eine plane Scheibe mit einer Wandstärke von z.B. 4,7 mm, einer zylindermantelförmigen Innenwandung und einer zylindermantelförmigen Außenwandung. Die radiale Außenwandung, ihr Außendurchmesser beträgt 388 mm, bildet die Zentrierwandung (88). Die radiale Ringbreite der Bremsscheibe (81) misst z.B. 24,75 mm.

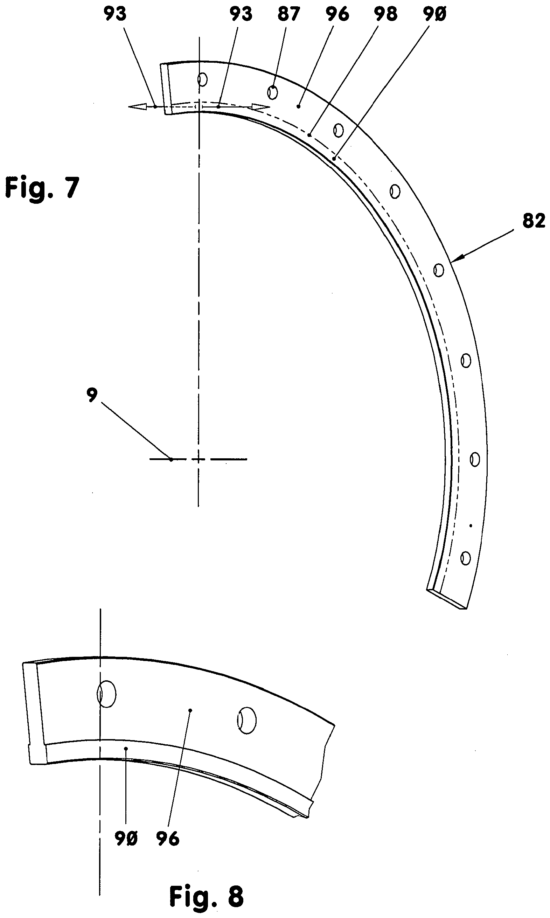

Die beiden großen Planflächen der Bremsscheibe (81) sind feinbearbeitet. Der zur Mittellinie (9) hin orientierte Teil der Planfläche ist der Kupplungsbereich (90) der Bremsscheibe (81). Er teilt sich in die beiden bremsscheibenseitigen Reibflächen (91, 92) auf. Die Reibflächen (91, 92) haben nach außen gerichtete Flächennormalen (93), vgl. Figur 7. Entgegen der Richtung dieser Flächennormalen (93) ist die Klemmrichtung der Brems- und/oder Klemmvorrichtung orientiert. Der äußere Teil der Planfläche der Bremsscheibe (81), in der auch die Befestigungsbohrungen (87) angeordnet sind, ist der Flanschbereich (96). Beide Bereiche werden durch die in Figur 7 hilfsweise dargestellte strichpunktierte Hilfslinie (98) des Teilstücks (82) getrennt. Sie liegt auf einem Durchmesser von z.B. 347,5 mm.

Ggf. hat der Flanschbereich (96) eine Wandstärke, die z.B. 1 mm kleiner ist als die Wandstärke des Kupplungsbereiches (90). Somit steht der Kupplungsbereich (90) z.B. beidseitig um 0,5 mm über den Flanschbereich (96) über.

Die einzelne Bremsscheibe bzw. ihr Hüllvolumen hat zur Befestigung an der Wellenglocke (131) z.B. 24 äquidistant auf dem Umfang verteilte Bohrungen (87) mit einem jeweiligen Durchmesser von z.B. 6,4 mm.

Die Reibflächen (91, 92) und/oder die Reibflächen (31, 32) des Spaltgehäuses (11) können eine Oberflächenstruktur aufweisen. Beispielsweise entsteht diese durch Sandstrahlen oder durch eine Diamant- oder Saphirbeschichtung. Derartige Beschichtungen weisen eine Schichtdicke von z.B. 0,038 mm auf. Die durchschnittliche Korngröße des Beschichtungsgrundmaterials liegt bei dieser Schichtstärke bei 30 um.

Die Bremsscheibe (81) besteht aus drei gleichförmigen Teilstücken, den Bremsscheibenkreisringstücke (82-84). Alle Teilstücke haben nach den Figuren 1-4 und 7 einen z.B. rechteckigen Querschnitt. Der Zentriwinkel der Bremsscheibenkreisringstücke (82-84) misst z.B. 118,08 Winkelgrade. Demnach haben im Ausführungsbeispiel die drei Radialspalte (85) jeweils eine Spaltbreite von 4 mm. Ggf. kann die Breite der Radialspalte (85) auch gegen Null gehen.

Die montierte Bremsscheibe (81) liegt zum einen an der Bundfläche (133) der Wellenglocke (131) an. Zum anderen kontaktiert sie mit ihrer Zentrierwandung (88) den Glockeninnenbund (132) der Welle (130). Die z.B. 24 Schrauben (99) halten die Teile (82-84) der Bremsscheibe (81) drehsteif an der Bundfläche (133) fest.

Selbstverständlich kann die Bremsscheibe (81) auch aus zwei oder vier und mehr Teilstücken zusammmengesetzt sein. Als weitere Bremsscheibenvariante können z.B. vier Teilstücke in der Form von Bremsscheibenkreisringstücken als Kreisringsegmente verwendet werden, wobei das einzelne Teilstück jeweils z.B. 45 Winkelgrade der Bremsscheibe (81) abdeckt. Bei einer gleichmäßigen Verteilung am Umfang bleiben somit vier Lücken zwischen den Teilstücken. Dabei entspricht der Umfangsanteil der vier Lücken dem der vier Teilstücke.

Ausgeliefert wird diese Brems- und/oder Klemmvorrichtung in Kombination mit der Wellenanbindungsbaugruppe (80, 100). Dabei sitzt die Wellenanbindungsbaugruppe (80, 100) koaxial in der Betätigungsbaugruppe (10). Die Bremsscheibe (81) - bzw. deren Teilstücke (82-84) - ist zuvor unter einem elastischen Aufweiten des Spaltgehäuses (11) in dessen Spaltraum (37) eingesteckt und dort ausgerichtet worden.

Für die Montage in der die Vorrichtung aufnehmenden Maschine wird die Wellenanbindungsbaugruppe (80, 100) ohne die Bremsscheibe (81) an der Welle (130) befestigt. Die Betätigungsbaugruppe (10) bzw. das Spaltgehäuse (11) mit der darin festgeklemmten Bremsscheibe (81) wird an der Anbaufläche (3) des Grundkörpers (1) - in der Regel lösbar - befestigt. Abschließend werden die Schrauben (99) in die entsprechenden bremsscheibenseitigen Bohrungen eingesetzt und an der Wellenglocke (131) oder dem Glockenflansch (138) verschraubt.

Steht im Druckraum (37) kein Hydraulikölbetriebsdruck an, so ist die Welle (130) gegenüber dem Grundkörper (1) festgeklemmt. Der Druckraum (37) weist keinen nennenswerten Öldruck auf, da der Ölzulauf über ein nicht dargestelltes Ventil in den Öltank entlastet ist. Die Biegeplatten (15, 16) liegen vorgespannt über ihre Zangenbacken (23, 24) an der Bremsscheibe (81) an, vgl. Figuren 2, 3 oder 4. Die Vorspannung ergibt sich aus der Federrate der vorgebeulten Biegeplatten (15, 16). Die Höhe der Federrate ist eine Funktion der ringscheibenseitigen Werkstoffauswahl und der Geometrie der Biegezone (21). Das erzeugte Brems- bzw. Haltemoment liegt bei den Ausführungsbeispielen bei 3000 ± 200 Nm.

Die Biegeplatten (15, 16) befänden sich nur dann im vollständig entspannten Zustand, wenn keine Bremsscheibe (81) zwischen den Zangenbacken (23, 24) läge. Dann wäre im Ausführungsbeispiel der Druckraum (37) ein Spaltraum mit konstanter Spaltbreite.

Um die Brems- und/oder Klemmvorrichtung zu lösen, wird z.B. über die Zulaufbohrung (41), vgl. Figur 2, oberer Darstellungsbereich, der Öldruck im Druckraum (37) auf z.B. 100 bis 150 * 10⁵ Pa erhöht. Von der Zulaufbohrung (41) aus pflanzt sich die Druckerhöhung über die Verteilbohrungen (42) und (43) in den Druckraum (37) fort. Die Biegeplatten (15, 16) beulen in den elastischen Biegezonen (21). Dabei wandert jede Klemmzone (22) gegenüber der ortsfest bleibenden Anbauzone (13) im Wesentlichen in Axialrichtung nach außen. Die Zangenbacken (23, 24) heben in Richtung der Pfeile (47) von der Bremsscheibe (81) ab, vgl. Figur 2, unterer Darstellungsbereich. Die betätigungsbaugruppenseitigen Reibflächen (31, 32) entfernen sich von den wellenanbindungsbaugruppenseitigen Reibflächen (91, 92), sodass zwischen der Welle (130) und dem Grundkörper (1) kein Kontakt mehr besteht. Das Lüftspiel pro Reibflächenpaarung (31) zu (91) und (32) zu (92), also der Abstand zwischen den zuvor sich kontaktierenden Reibflächen, beträgt nun zwischen 0,3 und 0,5 mm. Die Vorrichtung ist auf 5 bis 10 Millionen Öffnungs- bzw. Schließzyklen ausgelegt. Das Lüftspiel ist in Figur 2, unterer Darstellungsbereich, zur besseren Verdeutlichung stark vergrößert dargestellt. Selbstverständlich weitet sich das Spaltgehäuse (11) - im Gegensatz zur Darstellung in Figur 2 - ringsherum gleichmäßig auf.

### Bezugszeichenliste:

- 1: Grundkörper
- 2: Zentrierbund von (1)
- 3: Anbaufläche von (1)
- 5: Schrauben
- 7: Mittenebene
- 8: fiktive Achse, vertikal, liegt in (7)
- 9: Mittellinie der Vorrichtung und (130), zentral

- 10: Betätigungsbaugruppe
- 11: Spaltgehäuse, Ringkörper, bereichsweise beulbar
- 12: Vorderseite, Stirnseite
- 13: Anbauzone, innerer Bereich von (11)

- 14: Außenwandung, Rückseite, Stirnseite
- 15: Biegeplatte, außen
- 16: Biegeplatte, innen
- 17: Axialnut in (15)
- 18: Axialnut in (16)
- 19: Einfädelnuten

- 21: Biegezonen, beulbar, elastisch, mittlerer Bereich von (11)
- 22: Klemmzonen, äußerer Bereich von (11)
- 23: Zangenbacke, angeformt, rechts
- 24: Zangenbacke, angeformt, links
- 27: Nutwandung
- 28: Torusteilfläche

- 31, 32: Reibflächen von (23, 24)
- 33: Flächennormalen von (31, 32)
- 36: Feinbearbeitungszone
- 37: Druckraum; Spaltraum; Spaltraumnut, Nut
- 38: Bohrung, zylindrisch
- 39: Außenwandung, zylindrisch

- 41: Zulaufbohrung, Zulaufgewindebohrungen
- 42: Verteilbohrung, radial
- 43: Verteilbohrung, axial
- 45: Bohrungen, Befestigungsbohrungen
- 47: Pfeile, Bewegungsrichtung für das Lösen
- 49: Schneidring

- 50: Doppellippendichtung, Dichtring
- 51: Dichtlippen
- 52: Verschlussstopfengewindebohrung
- 54: Stauchkugeln
- 55: Verschlussstopfen
- 57: Unterseite von (50)
- 58: Stützstege

- 60: Stützelement
- 61: Stützstreifen
- 62: Zugbohrung, Querbohrung
- 65: 15°-Fase

- 80: Wellenanbindungsbaugruppe, angeformt
- 81: Bremsscheibe, dreiteilig, radial geteilt; Ring
- 82-84: Bremsscheibenkreisringstücke, Teilstücke
- 85: Radialspalte
- 87: Befestigungsbohrungen
- 88: Zentrierwandung, radiale Außenwandung

- 90: Kupplungsbereich
- 91, 92: Reibflächen von (81)
- 93: Flächennormalen von (91, 92)
- 96: Flanschbereich
- 98: Hilfslinie
- 99: Schrauben

- 100: Wellenanbindungsbaugruppe, angeschraubt

- 130: Welle
- 131: Wellenglocke
- 132: Glockeninnenbund
- 133: Bundfläche, plan
- 134: Zentrierkragen
- 135: M6-Gewindebohrungen in (131)
- 136: M6-Gewindebohrungen in (130)
- 137: Wellenbund
- 138: Glockenflansch

## Patentansprüche

1. Brems- und/oder Klemmvorrichtung für eine gegenüber einem Grundkörper (1) geführte Welle (130) mit einer Betätigungsbaugruppe (10) und mit einer Wellenanbindungsbaugruppe (80, 100),
- wobei die Betätigungsbaugruppe (10) ein Spaltgehäuse (11) aufweist, das eine Anbauzone (13) und eine bereichsweise elastisch beulbare Biegezone (21) mit zwei über einen nach außen orientierten Spaltraum (37) beabstandete Biegeplatten (15, 16) hat,
- wobei jede Biegeplatte (15, 16) in zwei einander gegenüberliegenden Klemmzonen (22) jeweils Zangenbacken (23, 24) mit Reibflächen (31, 32) aufweist, deren Flächennormalen (33) nach innen gerichtet sind,
- wobei jede Biegeplatte (15, 16) - zur Lagerung mindestens eines Stützelements (60) - vom Spaltraum (37) aus eine Axialnut (17, 18) aufweist,
- wobei zwischen den Biegeplatten (15, 16) und dem mindestens einen Stützelement (60) ein abgedichteter Spaltraum (37) liegt, der zum elastischen Auseinanderdrücken der Reibflächen (31, 32) mit einem Druckmedium befüllbar ist,
- wobei die Wellenanbindungsbaugruppe (80, 100) als Bremsscheibe (81) einen ein- oder mehrfach geteilten Ring oder mindestens zwei Kreisringsegmente aufweist,
- wobei die Wellenanbindungsbaugruppe (80, 100) einen Kupplungsbereich (90) aufweist, der zwei voneinander beabstandete Reibflächen (91, 92) hat, deren Flächennormalen (93) nach außen weisen,
- wobei bei entlastetem Spaltraum (37) die Reibflächen (31, 32) der Betätigungsbaugruppe (10) an den Reibflächen (91, 92) der Wellenanbindungsbaugruppe (80, 100) unter Bereitstellung der Klemm- und/oder Bremskraft angelegt sind, **dadurch gekennzeichnet, dass**
- das Stützelement (60) ein elastisch verformbarer metallischer Stützstreifen (61) ist, dessen Länge der mittleren Länge der einzelnen Axialnut (17, 18) entspricht und
- die einzelne Axialnut (17, 18) mindestens eine Einfädelnut (19) aufweist, die in sie einmündet.

2. Brems- und oder Klemmvorrichtung gemäß Anspruch 1, **dadurch gekennzeichnet, dass** die Wellenanbindungsbaugruppe (80, 100) einen Flanschbereich (96) aufweist, über den sie entweder direkt oder indirekt über einen Spannmechanismus an der Welle (130) angeordnet ist.

3. Brems- und oder Klemmvorrichtung gemäß Anspruch 1, **dadurch gekennzeichnet, dass** die Flächennormalen (33) zumindest eines Bereichs der Reibflächen (31, 32) der Zangenbacken (23, 24) parallel zur Mittellinie (9) der Welle (130) orientiert sind.

4. Brems- und oder Klemmvorrichtung gemäß Anspruch 1, **dadurch gekennzeichnet, dass** die Axialnuten (17, 18) der Biegeplatten (15, 16) im Bereich zwischen den Reibflächen (31, 32) und dem Grund des Spaltraumes (37) angeordnet sind.

5. Brems- und oder Klemmvorrichtung gemäß Anspruch 1, **dadurch gekennzeichnet, dass** der Stützstreifen (61) - zumindest im Bereich eines Endes - eine Querbohrung (62) aufweist.

6. Brems- und oder Klemmvorrichtung gemäß Anspruch 1, **dadurch gekennzeichnet, dass** die einzelne Bremsscheibe (81), deren Teilstücke (82-84) oder Kreisringsegmente beidseitig plan sind.

7. Brems- und oder Klemmvorrichtung gemäß Anspruch 1, **dadurch gekennzeichnet, dass** die Bremsscheibe (81) neben dem Kupplungsbereich (90) einen Flanschbereich (96) aufweist, dessen Wandstärke kleiner als die des Kupplungsbereiches (90) ist.

8. Brems- und oder Klemmvorrichtung gemäß Anspruch 1, **dadurch gekennzeichnet, dass** die Bremsscheibe aus mindestens drei Teilstücken (82-84) besteht, die die gleiche Masse haben, wobei die kürzesten Verbindungslinien zwischen Vorrichtungsmittellinie (9) und zwei benachbarten Massenschwerpunkten jeweils den gleichen Winkel einschließen.

## Claims

1. Braking and/or clamping device for a shaft (130) guided in relation to a base body (1) with an actuation assembly (10) and with a shaft-connection assembly (80, 100),
- wherein the actuation assembly (10) comprises a gap housing (11) which comprises an attachment zone (13) and a bending zone (21) that can be elastically buckled in sections with two bending plates (15, 16) spaced apart by an outwardly orientated gap space (37),
- wherein each bending plate (15, 16) comprises pincer jaws (23, 24) with friction surfaces (31, 32) in two opposing clamping zones (22) whose surface normals (33) are pointed inwards,
- wherein each bending plate (15, 16) - for supporting at least one support element (60) - comprises an axial groove (17, 18) from the gap space (37),
- wherein there is a sealed gap space (37) between the bending plates (15, 16) and at least one support element (60), which can be filled with a pressure medium for the purpose of elastically pushing the friction surfaces (31, 32) apart,
- wherein the shaft-connection assembly (80, 100) comprises a singly or multiply divided ring or at least two circular ring segments as a brake disc (81),
- wherein the shaft-connection assembly (80, 100) comprises a coupling area (90) which has two interspaced friction surfaces (91, 92), the surface normals (93) of which point outwards,
- wherein the friction surfaces (31, 32) of the actuation assembly (10) are applied to the friction surfaces (91, 92) of the shaft-connection assembly (80, 100) with the gap space (37) being unburdened, thereby providing the clamping and/or braking force, **characterized in that**
- the support element (60) is an elastically deformable metallic support strip (61), the length of which corresponds to the average length of the individual axial groove (17, 18), and
- the single axial groove (17, 18) comprises at least one threading groove (19) that flows into it.

2. The braking and/or clamping device according to Claim 1, **characterized in that** the shaft-connection assembly (80, 100) comprises a flange area (96) over which it is arranged either directly or indirectly by means of a clamping mechanism on the shaft (130).

3. The braking and/or clamping device according to Claim 1, **characterized in that** the surface normals (33) of at least one area of the friction surfaces (31, 32) of the pincer jaws (23, 24) are orientated parallel to the centre line (9) of the shaft (130).

4. The braking and/or clamping device according to Claim 1, **characterized in that** the axial grooves (17, 18) of the bending plates (15, 16) are arranged in the area between the friction surfaces (31, 32) and the bottom of the gap space (37).

5. The braking and/or clamping device according to Claim 1, **characterized in that** the support strip (61) comprises a transverse bore hole (62) at least in the area of one end.

6. The braking and/or clamping device according to Claim 1, **characterized in that** the single brake disc (81), its sections (82-84) or circular ring segments are flat on both sides.

7. The braking and/or clamping device according to Claim 1, **characterized in that** the brake disc (81) comprises, in addition to the coupling area (90), a flange area (96), the wall thickness of which is smaller than that of the coupling area (90).

8. The braking and/or clamping device according to Claim 1, **characterized in that** the brake disc consists of at least three sectional parts (82-84) with the same mass, wherein the shortest connecting lines between the device centre line (9) and two adjacent centres of mass each form the same angle.

## Revendications

1. Dispositif de freinage et/ou de serrage pour un arbre (130) guidé par rapport à un corps de base (1) avec un ensemble d'actionnement (10) et avec un ensemble de liaison d'arbre (80, 100),
- sachant que l'ensemble d'actionnement (10) comporte un boîtier à fente (11), qui possède une zone de montage (13) et une zone de flexion (21) pouvant être élastiquement voilée par endroits avec deux plaquettes de flexion (15, 16) espacées par un espace en fente (37) orienté vers l'extérieur,
- sachant que chaque plaquette de flexion (15, 16) comporte respectivement dans deux zones de serrage (22) opposées l'une à l'autre des mâchoires de pince (23, 24) avec des surfaces de frottement (31, 32), dont les normales de surface (33) sont orientées vers l'intérieur,
- sachant que chaque plaquette de flexion (15, 16) comporte depuis l'espace en fente (37) une rainure axiale (17, 18) pour loger au moins un élément de support (60),
- sachant qu'entre les plaquettes de flexion (15, 16) et au moins un élément de support (60) est situé un espace en fente (37) étanchéifié, qui peut être rempli d'un milieu sous pression pour l'écartement élastique des surfaces de frottement (31, 32),
- sachant que l'ensemble de liaison d'arbre (80, 100) comporte en tant que disque de frein (81) un anneau divisé une ou plusieurs fois ou au moins deux segments annulaires,
- sachant que l'ensemble de liaison d'arbre (80, 100) comporte une zone d'accouplement (90), qui possède deux surfaces de frottement (91, 92) à distance l'une de l'autre, dont les normales de surface (93) sont tournées vers l'extérieur,
- sachant qu'avec l'espace en fente (37) déchargé, les surfaces de frottement (31, 32) de l'ensemble d'actionnement (10) sont appliquées aux surfaces de frottement (91, 92) de l'ensemble de liaison d'arbre (80, 100) par apport de la force de freinage et/ou de serrage, **caractérisé en ce que**
- l'élément de support (60) est une lame de soutien (61) métallique élastiquement déformable, dont la longueur correspond à la longueur moyenne de la rainure axiale (17, 18) individuelle, et
- la rainure axiale (17, 18) individuelle comporte au moins une rainure d'insertion (19), qui débouche en elle.

2. Dispositif de freinage et/ou de serrage selon la revendication 1, **caractérisé en ce que** l'ensemble de liaison d'arbre (80, 100) comporte une zone de bridage (96) sur laquelle il est disposé soit directement ou indirectement sur l'arbre (130) par le biais d'un mécanisme de serrage.

3. Dispositif de freinage et/ou de serrage selon la revendication 1, **caractérisé en ce que** les normales de surface (33) d'au moins une zone des surfaces de frottement (31, 32) des mâchoires de pince (23, 24) sont orientées parallèlement à l'axe médian (9) de l'arbre (130).

4. Dispositif de freinage et/ou de serrage selon la revendication 1, **caractérisé en ce que** les rainures axiales (17, 18) des plaquettes de flexion (15, 16) sont disposées dans la zone située entre les surfaces de frottement (31, 32) et la base de l'espace en fente (37) .

5. Dispositif de freinage et/ou de serrage selon la revendication 1, **caractérisé en ce que** la lame de soutien (61) comporte, au moins dans la zone d'une extrémité, un alésage transversal (62).

6. Dispositif de freinage et/ou de serrage selon la revendication 1, **caractérisé par** le disque de frein (81) individuel, dont les parties de pièce (82 - 84) ou les segments annulaires sont plans des deux côtés.

7. Dispositif de freinage et/ou de serrage selon la revendication 1, **caractérisé en ce que** le disque de frein (81) comporte en plus de la zone d'accouplement (90) une zone de bridage (96), dont l'épaisseur de paroi est plus petite que celle de la zone d'accouplement (90) .

8. Dispositif de freinage et/ou de serrage selon la revendication 1, **caractérisé en ce que** le disque de frein est composé d'au moins trois parties de pièce (82 - 84), qui possèdent les mêmes dimensions, sachant que les lignes de liaison les plus courtes entre l'axe médian de dispositif (9) et deux centres de gravité voisins forment le même angle.
